# EUROPÄISCHE PATENTSCHRIFT

(11) **EP 4 588 612 B1**
(45) Veröffentlichungstag und Bekanntmachung des Hinweises auf die Patenterteilung: **03.06.2026**
(21) Anmeldenummer: 24153015.3
(22) Anmeldetag: 20.01.2024
(51) Int. Cl.: B23Q 1/66, B23Q 11/08, B23Q 39/02

(54) **WERKZEUGMASCHINE**
MACHINE TOOL
MACHINE-OUTIL

(43) Veröffentlichungstag der Anmeldung: 23.07.2025
(73) Patentinhaber: Schwäbische Werkzeugmaschinen GmbH, 78713 Schramberg-Waldmössingen (DE)
(72) Erfinder: Mixner, Marcus, 78739 Hardt (DE)
(74) Vertreter: Schorr, Peter Karl

(56) Entgegenhaltungen:
- EP-A2- 3 715 051
- EP-B1- 2 897 765
- CN-A- 117 325 005
- DE-A1- 102016 115 447
- DE-C1- 19 913 715

## Beschreibung

Die Erfindung betrifft eine Werkzeugmaschine mit einem Maschinengestell mit mindestens einer Arbeitsspindel, die um eine Spindelachse drehbar gelagert ist, mit mindestens einem der mindestens einen Arbeitsspindel zugeordneten Werkstücktisch, der mittelbar oder unmittelbar im Maschinengestell um eine Rotationsachse dreh- oder schwenkbar gelagert ist, der eine Tragstruktur, der eine geschlossene, flächenhafte Trennwand, die sich über die gesamte Breite des Werkstücktischs quer zur Rotationsachse und über die gesamte Länge des Werkstücktischs parallel zur Rotationsachse erstreckt, und der mindestens eine Werkstückaufnahme umfasst, die an der Trennwand und/oder an der Tragstruktur drehfest festgelegt ist, wobei der Werkstücktisch durch Drehung um die Rotationsachse in eine Trennstellung überführbar ist, in der die Trennwand mit ihrer größten Oberfläche quer zur zugeordneten Spindelachse verlaufend angeordnet ist und einen der Arbeitsspindel zugewandten ersten Bereich des Werkstücktischs, in dem eine darin angeordnete Werkstückaufnahme der Arbeitsspindel zugewandt ist, von einem der Arbeitsspindel abgewandten zweiten Bereich des Werkstücktischs räumlich trennt.

Werkzeugmaschinen sind in unterschiedlichen Ausführungsformen und Ausgestaltungen aus dem Stand der Technik bekannt. Diese können beispielsweise Maschinengestelle umfassen, an denen ein Werkstücktisch angeordnet ist, an dem Werkstücke an einer Werkstückaufnahme lösbar befestigt werden können. Die Werkstücke können durch eine Arbeitsspindel der Werkzeugmaschine bearbeitet werden.

Bei bekannten Werkzeugmaschinen wird die Werkstückaufnahme an einem Werkstücktisch drehfest festgelegt. Hierbei ist bei einem Be- oder Entladen der Werkstückaufnahme des Werkstücktischs die Arbeitsspindel meist durch eine freie Sichtstrecke zum Werkstücktisch beabstandet. Um die Gefahr einer Verletzung von Bedienpersonal, insbesondere beim Be- oder Entladen der Werkstückaufnahme, zu reduzieren, wird die Arbeitsspindel in einem Be- und Entlademodus der Werkzeugmaschine maximal weit zum Werkstücktisch beabstandet. Hierdurch ist ausreichend Bauraum vorzusehen, um ausreichend Arbeitssicherheit gewährleisten zu können.

Gattungsgemäße Werkzeugmaschinen sind bekannt aus DE 199 13 715 C1, CN 117 325 005 A und EP 3 715 051 A2.

Eine nicht gattungsgemäße Werkzeugmaschine, bei der die Trennwand mit ihrer größten Oberfläche parallel zur zugeordneten Spindelachse verlaufend angeordnet ist, ist bekannt aus EP 2 897 765 B1.

Eine Aufgabe eines Ausführungsbeispiels der Erfindung ist, eine Werkzeugmaschine vorzuschlagen, bei der ein Abstand zwischen Rotationsachse und Arbeitsspindel reduzierbar ist.

Diese Aufgabe wird gelöst bei einer eingangs genannten Werkzeugmaschine dadurch gelöst, dass der zweite Bereich einen der Arbeitsspindel abgewandten Beladebereich des Werkstücktischs umfasst, dass die Trennwand des Werkstücktischs mindestens eine quer zur Rotationsachse erstreckte, durchgehende Öffnung umfasst, durch die die Trennwand durch die Arbeitsspindel durchgreifbar, und eine im Beladebereich angeordnete Werkstückaufnahme der durchgreifenden Arbeitsspindel zugänglich ist, und dass die Trennwand mindestens ein flächenhaftes Verschlussmittel umfasst, das in oder an der mindestens einen Öffnung angeordnet ist und das von einer Freigabestellung, in der das Verschlussmittel die Öffnung zumindest in Richtung quer zur Rotationsachse in Gänze oder abschnittsweise freigibt, in eine Verschlussstellung überführbar ist, in der das Verschlussmittel die Öffnung zumindest in Richtung quer zur Rotationsachse in Gänze verschließt.

Dadurch, dass der Werkstücktisch der Werkzeugmaschine eine geschlossene flächenhafte Trennwand umfasst, die sich über die gesamte Breite des Werkstücktischs quer zur Rotationsachse und über die gesamte Länge des Werkstücktischs parallel zur Rotationsachse erstreckt, kann die Werkstückaufnahme in der Trennstellung be- und entladen werden, wenn die Werkstückaufnahme im zweiten Bereich des Werkstücktischs angeordnet ist. Die Trennwand ist solchenfalls zwischen einer Bedienperson und der Arbeitsspindel angeordnet und schirmt die Bedienperson ab. Hierdurch ist es ermöglicht, dass ein Abstand zwischen Arbeitsspindel und Rotationsachse des Werkstücktischs reduzierbar ist und gleichzeitig die Anforderungen an Arbeitssicherheit gewährleistet sind.

An der Werkstückaufnahme können ein oder mehrere Werkstücke festgelegt werden, um durch die mindestens eine Arbeitsspindel bearbeitet zu werden.

Dadurch, dass die Trennwand des Werkstücktischs mindestens eine quer zur Rotationsachse erstreckte, durchgehende Öffnung umfasst, ist ein hoher Zugang zu den durch die Arbeitsspindel zu bearbeiteten Werkstücken gewährleistbar.

Dadurch, dass die Trennwand eine quer zur Rotationsachse erstreckte, durchgehende Öffnung umfasst, kann die Arbeitsspindel die Öffnung durchragen und ein an der Werkstückaufnahme festgelegtes Werkstück bearbeiten, auch wenn sich die Werkstückaufnahme im zweiten Bereich des Werkstücktischs befindet. Hierdurch ist die Zugänglichkeit und die Bearbeitbarkeit von an der Werkstückaufnahme angeordneten Werkstücken verbessert.

Dadurch, dass die Trennwand mindestens ein flächenhaftes Verschlussmittel umfasst, das in der Freigabestellung die Öffnung zum Durchgreifen freigibt und das in der Verschlussstellung die Öffnung verschließt, kann in einem Be- oder Entlademodus der Werkstückmaschine die Arbeitssicherheit hochgehalten werden durch Überführen des Verschlussmittels in die Verschlussstellung.

Solchenfalls erweist es sich insbesondere als vorteilhaft, wenn das Verschlusselement in der Trennstellung des Werkstücktischs stets in der Verschlussstellung angeordnet ist.

Darüber hinaus ist durch das Vorsehen mindestens einer in der Trennwand vorgesehenen Öffnung ein kompaktes Ausbilden des Werkstücktischs ermöglicht, da ein geringer Abstand zwischen Trennwand und Werkstückaufnahme gewählt werden kann, ohne die Zugänglichkeit der Werkstückaufnahme durch die Arbeitsspindel unüberwindbar zu blockieren.

Es sind Ausführungsformen der Werkzeugmaschine denkbar, bei denen die flächenhafte Trennwand zur Rotationsachse berührungsfrei beabstandet ist oder bei denen die Rotationsachse innerhalb der Trennwand verläuft und/oder bei denen die mindestens eine Werkstückaufnahme zur Rotationsachse berührungsfrei beabstandet ist oder dass die Rotationsachse innerhalb mindestens einer der mindestens einen Werkstückaufnahme verläuft.

Wenn die Rotationsachse sowohl zur flächenhaften Trennwand als auch zur Werkstückaufnahme berührungsfrei verläuft, kann ein Drehen um die Rotationsachse ohne Unwucht erfolgen. Solchenfalls kann die Rotationsachse durch den gemeinsamen Masseschwerpunkt von Trennwand und Werkstückaufnahme verlaufen.

Dieses erweist sich insbesondere dann als vorteilhaft, wenn an dem Werkstücktisch lediglich eine einzige Werkstückaufnahme angeordnet ist. Solchenfalls kann der Schwenkbereich des Systems aus Trennwand und Werkstückaufnahme reduziert sein.

Wenn der Werkstücktisch mehrere Werkstückaufnahmen umfasst, die beispielsweise auf einander gegenüberliegenden Seiten der Trennwand festgelegt sind, kann es sich als vorteilhaft erweisen, wenn die Rotationsachse innerhalb der Trennwand verläuft. Solchenfalls kann bei einer derartigen Anordnung der Schwenkbereich minimal gehalten werden.

Um ein Überführen des Verschlussmittels von der Freigabestellung in die Verschlussstellung und umgekehrt, zu stabilisieren, erweist es sich als vorteilhaft, wenn die Trennwand in der mindestens einen Öffnung mindestens eine Führung, wie Nut oder Vorsprung, umfasst, durch die das Überführen des Verschlussmittels von der Freigabestellung in die Verschlussstellung und zurück führbar und gegen ein Bewegen quer zur Überführungsrichtung festgelegt ist und/oder wenn das Verschlussmittel schiebetürartig ausgebildet ist und mindestens ein flächenhaftes, insbesondere plattenartiges, Türelement umfasst oder dass das Verschlussmittel rollladenartig ausgebildet ist und eine Mehrzahl von lamellenartigen Verschlusselementen umfasst.

Grundsätzlich ist es denkbar, dass die Trennwand eine einzige Öffnung umfasst, die beispielsweise zentrisch in der Trennwand verläuft. Um die Stabilität der Trennwand hochzuhalten, erweist es sich als vorteilhaft, wenn die Trennwand eine Mehrzahl von quer zur Rotationsachse erstreckte, durchgehende Öffnungen umfasst, die jeweils durch Stegabschnitte der Trennwand zueinander beabstandet sind, wobei jeder Öffnung ein eigenes Verschlussmittel zugeordnet ist oder wobei mindestens zwei Öffnungen, insbesondere allen Öffnungen der Trennwand, ein gemeinsames Verschlussmittel zugeordnet ist.

Solchenfalls ist es beispielsweise denkbar, dass die Trennwand zwei, vier, sechs oder acht Öffnungen umfasst, die bezüglich der Rotationsachse spiegelsymmetrisch in der Trennwand angeordnet sind.

Bei einer Weiterbildung letztgenannter Ausführungsform erweist es sich als vorteilhaft, wenn die Trennwand des Werkstücktischs mindestens einen parallel zur Rotationsachse erstreckten Zentral-Stegabschnitt umfasst, durch den die Rotationsachse verläuft, und/oder mindestens zwei parallel zur Rotationsachse erstreckte Rand-Stegabschnitte, die einen äußeren Rand der Trennwand bilden, insbesondere wobei jeweils zwischen Zentral-Stegabschnitt und Rand-Stegabschnitt mindestens zwei, insbesondere mindestens vier, Öffnungen angeordnet sind, denen jeweils ein eigenes oder ein gemeinsames Verschlussmittel zugeordnet ist.

Grundsätzlich ist es denkbar, dass Trennwand und Tragstruktur separate und voneinander separierbare Bauteile sind. Bei einer Ausführungsform der Werkzeugmaschine kann vorgesehen sein, dass die Trennwand und die Tragstruktur ein einstückiges gemeinsames Bauteil bilden und/oder dass der Zentral-Stegabschnitt und/oder die mindestens zwei Rand-Stegabschnitte lastaufnehmend und tragend ausgebildet sind.

Wenn die Trennwand und die Tragstruktur ein einstückiges gemeinsames Bauteil bilden, kann die Werkzeugmaschine bauteilreduziert ausgebildet sein. Solchenfalls ist die mindestens eine Werkstückaufnahme unmittelbar an der Trennwand festgelegt. Hierbei kann die Werkstückaufnahme unmittelbar an der Trennwand berührend anliegend an der Trennwand festgelegt sein oder durch Abstandsmittel berührungsfrei zur Trennwand beabstandet, an der Trennwand festgelegt sein.

Wenn die Trennwand und die Tragstruktur ein einstückiges gemeinsames Bauteil bilden, erweist es sich als vorteilhaft, wenn der Zentral-Stegabschnitt und/oder die mindestens zwei Rand-Stegabschnitte lastaufnehmend und tragend ausgebildet sind.

Solchenfalls können parallel zur Rotationsachse Kräfte aufgenommen und an das Maschinengestell mittelbar oder unmittelbar übertragen werden.

Die Ausrichtung der Rotationsachse und des Werkstücktischs können grundsätzlich beliebig erfolgen. Bei Ausführungsformen der Werkstückmaschine ist vorgesehen, dass die Rotationsachse des Werkstücktischs parallel zu einer horizontal verlaufenden X-Achse oder parallel zu einer vertikal verlaufenden Y-Achse verläuft und/oder dass die Spindelachse der Arbeitsspindel parallel zu einer horizontal verlaufenden Z-Achse verläuft, die quer zur vertikal verlaufenden Y-Achse und quer zur horizontal verlaufenden X-Achse verläuft.

Grundsätzlich ist es denkbar, dass in dem Werkstücktisch eine einzige Werkstückaufnahme angeordnet ist. Darüber hinaus kann bei Ausführungsformen der Werkzeugmaschine vorgesehen sein, dass der Werkstücktisch mindestens eine erste Werkstückaufnahme und mindestens eine zweite Werkstückaufnahme umfasst, die bezüglich der Trennwand auf einander gegenüberliegenden Seiten der Trennwand drehfest an der Trennwand und/oder an der Tragstruktur des Werkstücktischs drehfest angeordnet sind.

Wenn der Werkstücktisch mindestens eine erste Werkstückaufnahme und mindestens eine zweite Werkstückaufnahme umfasst, die bezüglich der Trennwand aufeinander gegenüberliegenden Seiten der Trennwand drehfest an der Trennwand und/oder an der Tragstruktur des Werkstücktischs drehfest angeordnet sind, können Werkstücke an der ersten Werkstückaufnahme durch die Arbeitsspindel hauptzeitparallel bearbeitet werden, während im zweiten Bereich die zweite Werkstückaufnahme mit Werkstücken be- oder entladbar ist. Hierdurch sind Bearbeitungszeiten der Werkzeugmaschine reduzierbar.

Ferner ist es denkbar, dass bezüglich der Trennwand auf einer Seite mehrere Werkstückaufnahmen vorgesehen sind. So können beispielsweise mindestens zwei erste Werkstückaufnahmen auf einer Seite bezüglich der Trennwand an der Trennwand angeordnet sein und auf der gegenüberliegenden Seite mindestens zwei zweite Werkstückaufnahmen. Solchenfalls können die zwei ersten Werkstückaufnahmen und die zwei zweiten Werkstückaufnahmen jeweils parallel zueinander verlaufen.

Um zu gewährleisten, dass bei einem Überführen des Werkstücktischs durch Drehen um die Rotationsachse, um beispielsweise 180°, eine Werkstückaufnahme sich stets an der gleichen Position zum Bearbeiten durch die Arbeitsspindel befindet, erweist es sich als vorteilhaft, wenn erste Werkstückaufnahme und die zweite Werkstückaufnahme symmetrisch, insbesondere punktsymmetrisch, bezüglich der Rotationsachse zueinander angeordnet und ausgerichtet an der Trennwand und/oder der Tragstruktur des Werkstücktischs drehfest festgelegt sind.

Eine kompakte und so genannte verschränkte Anordnung beim Vorsehen von zwei einander gegenüberliegenden Werkstückaufnahmen lässt sich gewährleisten, wenn die erste Werkstückaufnahme und die zweite Werkstückaufnahme in einer Ebene parallel zur trennenden Oberfläche der Trennwand betrachtet in Richtung quer zur Rotationsachse überlappungsfrei zueinander versetzt angeordnet sind.

Hierdurch kann ein Abstand zwischen Rotationsachse und Arbeitsspindel weiter reduziert werden.

Eine Werkzeugmaschine lässt sich kompakt ausgestalten, bei der der mindestens eine Werkstücktisch unmittelbar am Maschinengestell dreh- oder schwenkbar gelagert festgelegt ist und der Werkstücktisch zumindest in einem hauptzeitparallelen Be- und Entlademodus der Werkzeugmaschine in die Trennstellung überführt wird, in der der erste Bereich einen der Arbeitsspindel zugewandten Arbeitsbereich des Werkstücktischs, in dem eine darin angeordnete Werkstückaufnahme der Arbeitsspindel zugewandt ist, und in der der zweite Bereich einen der Arbeitsspindel abgewandten Beladebereich des Werkstücktischs umfasst, in dem eine darin angeordnete Werkstückaufnahme be- und entladbar ist.

Hierdurch kann die Werkzeugmaschine sehr kompakt ausgebildet sein. Dadurch, dass der Werkstücktisch unmittelbar am Maschinengestell dreh- oder schwenkbar gelagert festgelegt ist, kann ein Abstand zwischen Arbeitsspindel und Rotationsachse sehr gering gewählt werden. Hierdurch kann die Werkzeugmaschine bauraumreduziert ausgebildet sein.

Um die Menge an gleichzeitig herstellbaren Werkstücken zu erhöhen, kann bei einer Weiterbildung letztgenannter Ausführungsform vorgesehen sein, dass der mindestens eine Werkstücktisch mindestens zwei Werkstücktische umfasst, die bezüglich ihrer Rotationsachse parallel zueinander verlaufen und quer zur Rotationsachse berührungsfrei zueinander beabstandet sind und dass die mindestens eine Arbeitsspindel mindestens zwei Arbeitsspindeln umfasst, wobei jede Arbeitsspindel einem Werkstücktisch zugeordnet ist. Hierdurch können beispielsweise bei einem horizontalen Verlauf der Rotationsachse die beiden Werkstücktische bezüglich der vertikalen Y-Achse übereinander und miteinander fluchtend angeordnet sein. In der Trennstellung können darüber hinaus die Trennwände der mindestens zwei Werkstücktische einander spalt- oder fugenlos fortsetzen und hierdurch einen Arbeitsbereich von dem Beladebereich in Gänze oder abschnittweise abtrennen. Wenn mindestens zwei Werkstücktische vorgesehen sind, erweist es sich zudem als vorteilhaft, wenn die Werkzeugmaschine mindestens zwei Arbeitsspindel umfasst. Hierbei ist jede Arbeitsspindel einem Werkstücktisch zugeordnet.

Darüber hinaus sind Ausführungsformen denkbar, bei denen der mindestens eine Werkstücktisch mittelbar am Maschinengestell dreh- oder schwenkbar gelagert festgelegt ist. Mittelbar bedeutet, dass der Werkstücktisch nicht unmittelbar am Maschinengestell festgelegt ist, sondern eine weitere Komponente dazwischengeschaltet ist.

Bei einer Ausführungsform ist vorgesehen, dass der mindestens eine Werkstücktisch an einem Schwenkträger dreh- oder schwenkbar gelagert festgelegt ist, wobei der Schwenkträger am Maschinengestell um eine Schwenkachse dreh- oder schwenkbar gelagert festgelegt ist und von einer ersten Schwenkstellung, in der ein Werkstücktisch in einem der Arbeitsspindel zugewandten Arbeitsbereich anordenbar ist, in eine zweite Schwenkstellung überführbar ist, in der der Werkstücktisch in einem Beladebereich angeordnet ist, in dem eine darin angeordnete Werkstückaufnahme be- und entladbar ist.

Über den Schwenkträger ist der mindestens eine Werkstücktisch mittelbar an dem Maschinengestell festgelegt.

Der Schwenkträger ist um beispielsweise 180° von der ersten Schwenkstellung in die zweite Schwenkstellung und zurück, überführbar. Um Stillstandzeiten beim Beladen und Entladen zu reduzieren, ist bei einer Weiterbildung letztgenannter Ausführungsform vorgesehen, dass der mindestens eine Werkstücktisch mindestens zwei Werkstücktische umfasst, die am Schwenkträger auf einander gegenüberliegenden Seiten angeordnet sind, wobei ein erster Werkstücktisch in der ersten Schwenkstellung des Schwenkträgers im Arbeitsbereich angeordnet ist und ein zweiter Werkstücktisch in der ersten Schwenkstellung des Schwenkträgers im Beladebereich angeordnet ist und wobei der erste Werkstücktisch in der zweiten Schwenkstellung des Schwenkträgers im Beladebereich angeordnet ist und der zweite Werkstücktisch in der zweiten Schwenkstellung des Schwenkträgers im Arbeitsbereich angeordnet ist.

Wenn ein erster Werkstücktisch im Arbeitsbereich angeordnet ist, kann dieser durch die Arbeitsspindel bearbeitet werden, wenn sich die am ersten Werkstücktisch angeordnete Werkstückaufnahme im ersten Bereich des ersten Werkstücktischs befindet.

Um eine Werkstückaufnahme eines zweiten Werkstücktischs zu be- oder entladen, erweist es sich als vorteilhaft, wenn sich solchenfalls die Werkstückaufnahme des zweiten Werkstücktischs im zweiten Bereich des zweiten Werkstücktischs befindet.

Der Schwenkträger kann gestellartig ausgebildet sein. Solchenfalls kann eine räumliche Abtrennung des Arbeitsbereichs zum Beladebereich durch ein Anordnen der Werkstücktische in der Trennstellung gewährleistet werden.

Darüber hinaus ist es denkbar, dass der Schwenkträger selbst eine Schwenkträger-Trennwand umfasst, die in einer Schwenkträger-Trennstellung quer zur Spindelachse der Arbeitsspindeln verlaufend angeordnet ist und den Arbeitsbereich in Gänze oder zumindest abschnittsweise vom Beladebereich trennt.

Weitere Merkmale, Einzelheiten und Vorteile der Erfindung ergeben sich aus den beigefügten Patentansprüchen, aus der zeichnerischen Darstellung und nachfolgenden Beschreibung dreier bevorzugter Ausführungsformen der Werkzeugmaschine.

In der Zeichnung zeigt:
- Figur 1: Eine geschnittene schematische Seitenansicht auf ein erstes Ausführungsbeispiel der Werkzeugmaschine;
- Figur 2: Eine geschnittene schematische Seitenansicht auf ein zweites Ausführungsbeispiel der Werkzeugmaschine;
- Figur 3: Eine geschnittene schematische Seitenansicht auf ein drittes Ausführungsbeispiel der Werkzeugmaschine;
- Figur 4: Eine schematische perspektivische Draufsicht auf das Ausführungsbeispiel gemäß Figur 3, ohne Werkstückaufnahme bei einem zweiten Werkstücktisch.

Die Figuren zeigen Ausführungsbeispiele einer insgesamt mit dem Bezugszeichen 2 versehenen Werkzeugmaschine. Die Werkzeugmaschine 2 umfasst jeweils ein schematisch dargestelltes Maschinengestell 4 sowie eine Arbeitsspindel 6, die um eine Spindelachse 8 drehbar gelagert ist. Darüber hinaus umfasst die Werkzeugmaschine 2 mindestens einen mindestens einer Arbeitsspindel 6 zugeordneten Werkstücktisch 10, der bei den in den Figuren gezeigten Ausführungsbeispielen unmittelbar am Maschinengestell 4 um eine Rotationsachse 12 drehbar oder schwenkbar gelagert festgelegt ist.

Der Werkstücktisch 10 umfasst eine Tragstruktur 14 sowie eine geschlossene, flächenhafte Trennwand 16. Die Trennwand 16 erstreckt sich über die gesamte Breite des Werkstücktischs 10 quer zur Rotationsachse 12 betrachtet und über die gesamte Länge des Werkstücktischs 10, parallel zur Rotationsachse 12 betrachtet. Darüber hinaus umfasst der Werkstücktisch 10 eine Werkstückaufnahme 18, die an der Trennwand 16 und/oder an der Tragstruktur 14 drehfest festgelegt ist.

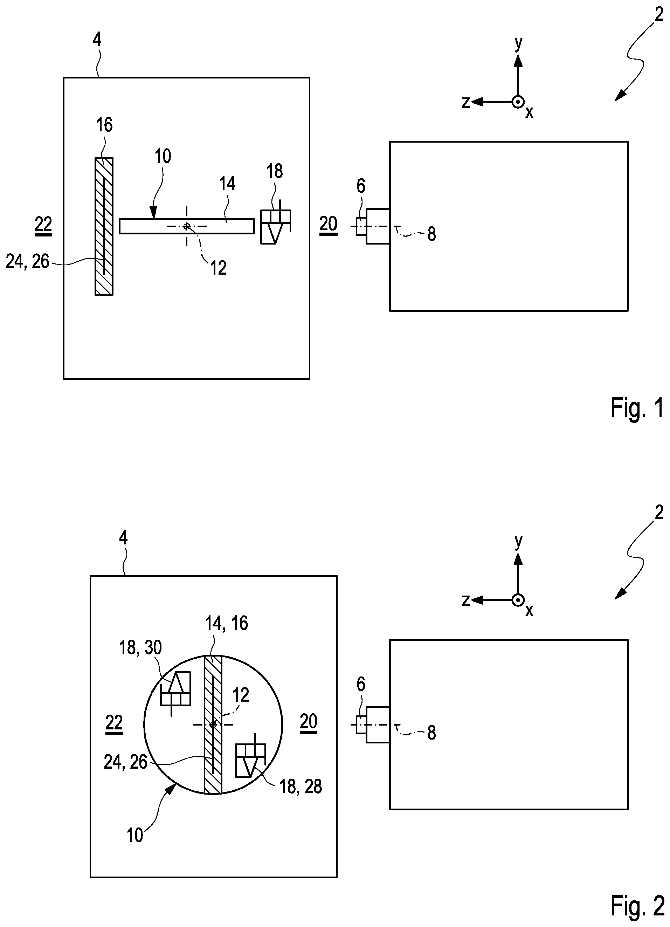

Der Werkstücktisch 10 ist durch Drehung um die Rotationsachse 12 in eine Trennstellung überführbar, in der die Trennwand 16 mit ihrer größten Oberfläche quer zur Spindelachse 8 der zugeordneten Arbeitsspindel verlaufend angeordnet ist. Derart angeordnet, trennt die Trennwand 16 einen der Arbeitsspindel 6 zugewandten ersten Bereich 20 des Werkstücktischs 10, in dem eine darin angeordnete Werkstückaufnahme 18 der Arbeitsspindel 6 zugewandt ist, von einem der Arbeitsspindel 6 abgewandten zweiten Bereich 22 des Werkstücktischs 10 räumlich. Den drei Ausführungsbeispielen gemäß der Figuren 1 bis 4 ist gemein, dass die Rotationsachse 12 des Werkzeugtischs 10 jeweils parallel zu einer horizontal verlaufenden X-Achse verläuft. Die Spindelachsen 8 der Arbeitsspindeln 6 verlaufen parallel zu einer horizontal verlaufenden Z-Achse, die quer zur horizontal verlaufenden X-Achse verläuft und quer zur vertikal verlaufenden Y-Achse.

Darüber hinaus ist allen Ausführungsbeispielen der Figuren 1 bis 4 gemein, dass in der Trennwand 16 Öffnungen 24 angeordnet sind, die quer zur Rotationsachse 12 durchgängig ausgebildet sind. Die durchgehenden Öffnungen 24 dienen dazu, dass durch die Trennwand 16 die Arbeitsspindel 6 durchgreifen kann und ein Werkstück, das in einer Werkstückaufnahme 18 festgelegt ist, die im zweiten Bereich 22 des Werkstücktischs 10 angeordnet ist, durch die Öffnung 24 hindurch bearbeiten kann.

Darüber hinaus umfassen die Trennwände 16 jeweils flächenhafte Verschlussmittel 26, die in oder an der Öffnung 24 angeordnet sind und die von einer Freigabestellung, in der das Verschlussmittel 26 die Öffnung 24 zumindest in Richtung quer zur Rotationsachse 12 in Gänze oder abschnittsweise freigibt, in eine Verschlussstellung überführbar sind, in der das Verschlussmittel 26 die Öffnung 24 zumindest in Richtung quer zur Rotationsachse 12 in Gänze verschließt. In den in den Figuren dargestellten Ausführungsformen sind die Verschlussmittel 26 jeweils in der Verschlussstellung angeordnet.

Figur 1 zeigt ein erstes Ausführungsbeispiel der Werkzeugmaschine 2. Bei dieser ist eine Werkstückaufnahme 18 vorgesehen, die über die Tragstruktur 14 an der Rotationsachse 12 drehbar oder schwenkbar gelagert ist. Der Werkstückaufnahme 18 gegenüberliegend ist die Trennwand 16 angeordnet. Sowohl Trennwand 16 als auch Werkstückaufnahme 18 sind zur Rotationsachse 12 berührungsfrei verlaufend angeordnet.

Figur 2 zeigt ein zweites Ausführungsbeispiel der Werkzeugmaschine 2, bei der an einem Werkstücktisch 10 zwei Werkstückaufnahmen 18 angeordnet sind. Die Werkstückaufnahmen 18 sind dabei derart angeordnet, dass eine erste Werkstückaufnahme 28 bei dem in Figur 2 dargestellten Ausführungsbeispiel im ersten Bereich 20 angeordnet ist und eine zweite Werkstückaufnahme 30 im zweiten Bereich 22. Erste Werkstückaufnahme 28 und zweite Werkstückaufnahme 30 sind durch die Trennwand 16 voneinander räumlich getrennt. Darüber hinaus sind die erste Werkstückaufnahme 28 und die zweite Werkstückaufnahme 30 in einer Ebene, parallel zur trennenden Oberfläche der Trennwand 16 betrachtet, in Richtung quer zur Rotationsachse 12, überlappungsfrei zueinander versetzt angeordnet. Ferner sind erste Werkstückaufnahme 28 und zweite Werkstückaufnahme 30 punktsymmetrisch bezüglich der Rotationsachse 12 zueinander angeordnet. Hierdurch ist eine verschränkte Anordnung ermöglicht.

Beim Ausführungsbeispiel gemäß Figur 2 ist eine der Werkstückaufnahmen 18 im ersten Bereich 20 angeordnet, der einen Arbeitsbereich bildet. Hier ist die erste Werkstückaufnahme 28 der Arbeitsspindel 6 zugänglich. Die im zweiten Bereich 22 angeordnete zweite Werkstückaufnahme 30 ist solchenfalls in einem Be- und Entladebereich be- oder entladbar.

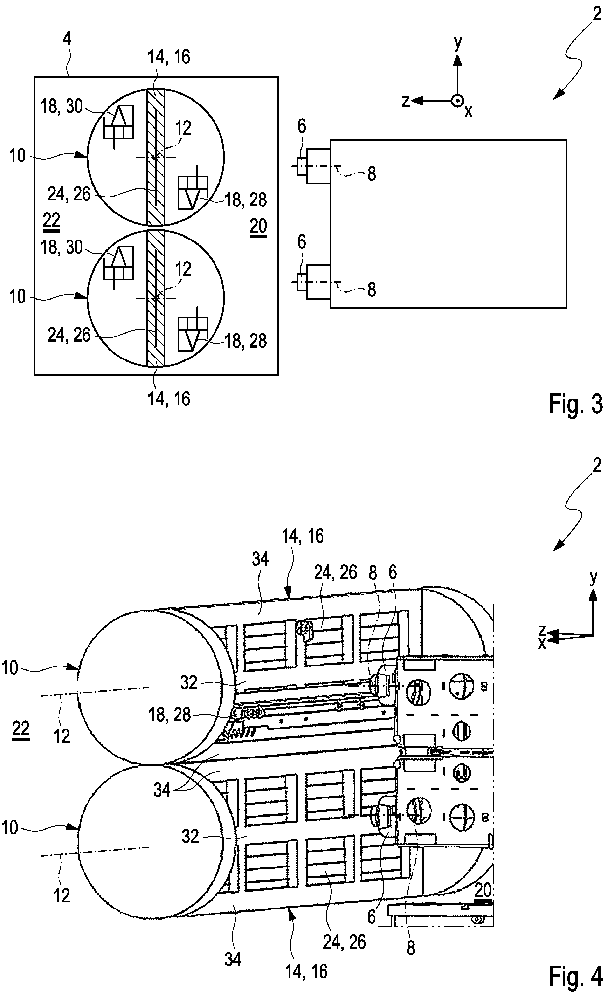

Figur 3 zeigt ein drittes Ausführungsbeispiel der Werkzeugmaschine 2. Ähnlich dem Ausführungsbeispiel gemäß Figur 2, umfasst ein Werkstücktisch 10 zwei Werkstückaufnahmen 18, nämlich jeweils eine erste Werkstückaufnahme 28 und eine zweite Werkstückaufnahme 30. Zusätzlich sind beim Ausführungsbeispiel gemäß Figur 3 zwei Werkstücktische 10 vorgesehen, die bezüglich ihrer Rotationsachsen 12 parallel zueinander verlaufend und quer zur Rotationsachse 12 berührungsfrei zueinander beabstandet sind. Beide Werkstücktische 10 sind bezüglich der vertikalen Y-Achse übereinander und miteinander fluchtend, angeordnet. Jeder der Werkstücktische 10 umfasst hierbei eine erste Werkstückaufnahme 28 und eine zweite Werkstückaufnahme 30. Jedem Werkstücktisch 10 ist eine Arbeitsspindel 6, die um eine eigene Spindelachse 8 drehbar gelagert ist, zugeordnet.

Figur 4 zeigt eine isometrische Vorderansicht des Ausführungsbeispiels gemäß Figur 3, wobei die erste Werkstückaufnahme 28 des unteren Werkstücktischs 10 ausgeblendet wurde. Figur 4 dient dazu, die Trennwand 16 und deren Aufbau näher darzustellen. Gemäß Figur 4 ist ersichtlich, dass die Trennwand 16 einen Zentral-Stegabschnitt 32 umfasst sowie zwei parallel dazu erstreckte Rand-Stegabschnitte 34. Zwischen dem Zentral-Stegabschnitt 32 und jeweils einem der Rand-Stegabschnitte 34 sind vier Öffnungen 24 angeordnet, die jeweils durch einen Steg zueinander beabstandet sind. Innerhalb der Öffnungen 24 ist ein lamellenartiges Verschlussmittel 26 angeordnet und in der Darstellung gemäß Figur 4 in der Verschlussstellung.

### Bezugszeichenliste

- 2: Werkzeugmaschine
- 4: Maschinengestell
- 6: Arbeitsspindel
- 8: Spindelachse
- 10: Werkstücktisch
- 12: Rotationsachse
- 14: Tragstruktur
- 16: Trennwand
- 18: Werkstückaufnahme
- 20: erster Bereich
- 22: zweiter Bereich
- 24: Öffnung
- 26: Verschlussmittel
- 28: erste Werkstückaufnahme
- 30: zweite Werkstückaufnahme
- 32: Zentral-Stegabschnitt
- 34: Rand-Stegabschnitt

## Patentansprüche

1. Werkzeugmaschine (2) mit einem Maschinengestell (4) mit mindestens einer Arbeitsspindel (6), die um eine Spindelachse (8) drehbar gelagert ist, mit mindestens einem der mindestens einen Arbeitsspindel (6) zugeordneten Werkstücktisch (10), der mittelbar oder unmittelbar im Maschinengestell (4) um eine Rotationsachse (12) dreh- oder schwenkbar gelagert ist, der eine Tragstruktur (14), der eine geschlossene, flächenhafte Trennwand (16), die sich über die gesamte Breite des Werkstücktischs (10) quer zur Rotationsachse (12) und über die gesamte Länge des Werkstücktischs (10) parallel zur Rotationsachse (12) erstreckt, und der mindestens eine Werkstückaufnahme (18) umfasst, die an der Trennwand (16) und/oder an der Tragstruktur (14) drehfest festgelegt ist, wobei der Werkstücktisch (10) durch Drehung um die Rotationsachse (12) in eine Trennstellung überführbar ist, in der die Trennwand (16) mit ihrer größten Oberfläche quer zur zugeordneten Spindelachse (8) verlaufend angeordnet ist und einen der Arbeitsspindel (6) zugewandten ersten Bereich (20) des Werkstücktischs (10), in dem eine darin angeordnete Werkstückaufnahme (18) der Arbeitsspindel (6) zugewandt ist, von einem der Arbeitsspindel (6) abgewandten zweiten Bereich (22) des Werkstücktischs (10) räumlich trennt, wobei der zweite Bereich (22) einen der Arbeitsspindel (6) abgewandten Beladebereich des Werkstücktischs umfasst, wobei die Trennwand (16) des Werkstücktischs (10) mindestens eine quer zur Rotationsachse (12) erstreckte, durchgehende Öffnung (24) umfasst, durch die die Trennwand (16) durch die Arbeitsspindel (6) durchgreifbar und eine in einem durch den zweiten Bereich (22) umfassten Beladebereich angeordnete Werkstückaufnahme (18) der durchgreifenden Arbeitsspindel (6) zugänglich ist, und wobei die Trennwand (16) mindestens ein flächenhaftes Verschlussmittel (26) umfasst, das in oder an der mindestens einen Öffnung (24) angeordnet ist und das von einer Freigabestellung, in der das Verschlussmittel (26) die Öffnung (24) zumindest in Richtung quer zur Rotationsachse (12) in Gänze oder abschnittsweise freigibt, in eine Verschlussstellung überführbar ist, in der das Verschlussmittel (26) die Öffnung (24) zumindest in Richtung quer zur Rotationsachse (12) in Gänze verschließt.

2. Werkzeugmaschine (2) nach Anspruch 1, **dadurch gekennzeichnet, dass** die flächenhafte Trennwand (16) zur Rotationsachse (12) berührungsfrei beabstandet ist oder dass die Rotationsachse (12) innerhalb der Trennwand (16) verläuft und/oder dass die mindestens eine Werkstückaufnahme (18) zur Rotationsachse (12) berührungsfrei beabstandet ist oder dass die Rotationsachse (12) innerhalb mindestens einer der mindestens einen Werkstückaufnahme (18) verläuft.

3. Werkzeugmaschine (2) nach Anspruch 1 oder 2, **dadurch gekennzeichnet, dass** die Trennwand (16) im Bereich der mindestens einen Öffnung (24) mindestens eine Führung, wie Nut oder Vorsprung, umfasst, durch die das Überführen des Verschlussmittels (26) von der Freigabestellung in die Verschlussstellung und zurück führbar und gegen ein Bewegen quer zur Überführungsrichtung festgelegt ist und/oder dass das Verschlussmittel (26) schiebetürartig ausgebildet ist und mindestens ein flächenhaftes, insbesondere plattenartiges, Türelement umfasst oder dass das Verschlussmittel (26) rollladenartig ausgebildet ist und eine Mehrzahl von lamellenartigen Verschlusselementen umfasst.

4. Werkzeugmaschine (2) nach einem der vorhergehenden Ansprüche, **dadurch gekennzeichnet, dass** die Trennwand (16) eine Mehrzahl von quer zur Rotationsachse (12) erstreckte, durchgehende Öffnungen (24) umfasst, die jeweils durch Stegabschnitte der Trennwand (16) zueinander beanstandet sind, wobei jeder Öffnung (24) ein eigenes Verschlussmittel (26) zugeordnet ist oder wobei mindestens zwei Öffnungen (24), insbesondere allen Öffnungen (24) der Trennwand (16), ein gemeinsames Verschlussmittel (26) zugeordnet ist.

5. Werkzeugmaschine (2) nach Anspruch 4, **dadurch gekennzeichnet, dass** die Trennwand (16) des Werkstücktischs (10) mindestens einen parallel zur Rotationsachse (12) erstreckten Zentral-Stegabschnitt (32) umfasst, durch den die Rotationsachse (12) verläuft, und/oder mindestens zwei parallel zur Rotationsachse (12) erstreckte Rand-Stegabschnitte (34), die einen äußeren Rand der Trennwand (16) bilden, insbesondere wobei jeweils zwischen Zentral-Stegabschnitt (32) und Rand-Stegabschnitt (34) mindestens zwei, insbesondere mindestens vier, Öffnungen (24) angeordnet sind, denen jeweils ein eigenes oder ein gemeinsames Verschlussmittel (26) zugeordnet ist.

6. Werkzeugmaschine (2) nach einem der vorhergehenden Ansprüche, **dadurch gekennzeichnet, dass** die Trennwand (16) und die Tragstruktur (14) ein einstückiges gemeinsames Bauteil bilden und/oder dass der Zentral-Stegabschnitt (32) und/oder die mindestens zwei Rand-Stegabschnitte (34) lastaufnehmend und tragend ausgebildet sind.

7. Werkzeugmaschine (2) nach einem der vorhergehenden Ansprüche, **dadurch gekennzeichnet, dass** die Rotationsachse (12) des Werkstücktischs (10) parallel zu einer horizontal verlaufenden X-Achse oder parallel zu einer vertikal verlaufenden Y-Achse verläuft und/oder dass die Spindelachse (8) der Arbeitsspindel (6) parallel zu einer horizontal verlaufenden Z-Achse verläuft, die quer zur vertikal verlaufenden Y-Achse und quer zur horizontal verlaufenden X-Achse verläuft.

8. Werkzeugmaschine (2) nach einem der vorhergehenden Ansprüche, **dadurch gekennzeichnet, dass** der Werkstücktisch (10) mindestens eine erste Werkstückaufnahme (28) und mindestens eine zweite Werkstückaufnahme (30) umfasst, die bezüglich der Trennwand (16) auf einander gegenüberliegenden Seiten der Trennwand (16) drehfest an der Trennwand (16) und/oder an der Tragstruktur (14) des Werkstücktischs (10) drehfest angeordnet sind.

9. Werkzeugmaschine (2) nach Anspruch 8, **dadurch gekennzeichnet, dass** die erste Werkstückaufnahme (28) und die zweite Werkstückaufnahme (30) symmetrisch, insbesondere punktsymmetrisch, bezüglich der Rotationsachse (12) zueinander angeordnet und ausgerichtet an der Trennwand (16) und/oder der Tragstruktur (14) des Werkstücktischs (10) drehfest festgelegt sind.

10. Werkzeugmaschine (2) nach Anspruch 8 oder 9, **dadurch gekennzeichnet, dass** die erste Werkstückaufnahme (28) und die zweite Werkstückaufnahme (30) in einer Ebene parallel zur trennenden Oberfläche der Trennwand (16) betrachtet in Richtung quer zur Rotationsachse (12) überlappungsfrei zueinander versetzt angeordnet sind.

11. Werkzeugmaschine (2) nach einem der vorhergehenden Ansprüche, **dadurch gekennzeichnet, dass** der mindestens eine Werkstücktisch (10) unmittelbar am Maschinengestell (4) dreh- oder schwenkbar gelagert festgelegt ist und der Werkstücktisch (10) zumindest in einem hauptzeitparallelen Be- und Entlademodus der Werkzeugmaschine (2) in die Trennstellung überführt wird, in der der erste Bereich (20) einen der Arbeitsspindel (6) zugewandten Arbeitsbereich des Werkstücktischs (10), in dem eine darin angeordnete Werkstückaufnahme (18) der Arbeitsspindel (6) zugewandt ist, und in der der zweite Bereich (22) einen der Arbeitsspindel (6) abgewandten Beladebereich des Werkstücktischs (10) umfasst, in dem eine darin angeordnete Werkstückaufnahme (18) be- und entladbar ist.

12. Werkzeugmaschine (2) nach Anspruch 11, **dadurch gekennzeichnet, dass** der mindestens eine Werkstücktisch (10) mindestens zwei Werkstücktische (10) umfasst, die bezüglich ihrer Rotationsachsen (12) parallel zueinander verlaufen und quer zur Rotationsachse (12) berührungsfrei zueinander beabstandet sind und dass die mindestens eine Arbeitsspindel (6) mindestens zwei Arbeitsspindeln (6) umfasst, wobei jede Arbeitsspindel (6) einem Werkstücktisch (10) zugeordnet ist.

13. Werkzeugmaschine (2) nach einem der Ansprüche 1 bis 10, **dadurch gekennzeichnet, dass** der mindestens eine Werkstücktisch (10) an einem Schwenkträger dreh- oder schwenkbar gelagert festgelegt ist, wobei der Schwenkträger am Maschinengestell (4) um eine Schwenkachse dreh- oder schwenkbar gelagert festgelegt ist und von einer ersten Schwenkstellung, in der ein Werkstücktisch (10) in einem der Arbeitsspindel (6) zugewandten Arbeitsbereich anordenbar ist, in eine zweite Schwenkstellung überführbar ist, in der der Werkstücktisch (10) in einem Beladebereich angeordnet ist, in dem eine darin angeordnete Werkstückaufnahme (18) be- und entladbar ist.

14. Werkzeugmaschine (2) nach Anspruch 13, **dadurch gekennzeichnet, dass** der mindestens eine Werkstücktisch (10) mindestens zwei Werkstücktische (10) umfasst, die am Schwenkträger auf einander gegenüberliegenden Seiten angeordnet sind, wobei ein erster Werkstücktisch (10) in der ersten Schwenkstellung des Schwenkträgers im Arbeitsbereich angeordnet ist und ein zweiter Werkstücktisch (10) in der ersten Schwenkstellung des Schwenkträgers im Beladebereich angeordnet ist und wobei der erste Werkstücktisch (10) in der zweiten Schwenkstellung des Schwenkträgers im Beladebereich angeordnet ist und der zweite Werkstücktisch (10) in der zweiten Schwenkstellung des Schwenkträgers im Arbeitsbereich angeordnet ist.

## Claims

1. Machine tool (2) with a machine frame (4) with at least one work spindle (6) mounted so as to rotate about a spindle axis (8), with at least one workpiece table (10) associated with at least one of the at least one work spindle (6), which is mounted either directly or indirectly in the machine frame (4) so as to be capable of rotating or swivelling about an axis of rotation (12), comprising a support structure (14), a closed, planar partition wall (16) extending across the entire width of the workpiece table (10) transversely to the axis of rotation (12) and across the entire length of the workpiece table (10) parallel to the axis of rotation (12), and comprising at least one workpiece holder (18), which is fixed in a non-rotating manner to the partition wall (16) and/or the support structure (14), wherein the workpiece table (10) can be moved into a cutting position by rotation about the axis of rotation (12), in which the partition (16) is arranged with its largest surface running perpendicular to the associated spindle axis (8) and a first area (20) of the workpiece table (10) facing the work spindle (6), in which a workpiece holder (18) arranged therein faces the work spindle (6), from a second area (22) of the workpiece table (10) facing away from the work spindle (6), wherein the second area (22) comprises a loading area of the workpiece table facing away from the work spindle (6), wherein the partition wall (16) of the workpiece table (10) comprises at least one continuous opening (24) extending transversely to the axis of rotation (12), such that the partition wall (16) can be penetrated by the work spindle (6) and a workpiece holder (18), arranged in a loading area enclosed by the second area (22), is accessible to the penetrating work spindle (6), and wherein the partition wall (16) comprises at least one planar closure means (26) which is arranged in or at the at least one opening (24) and which, from an open position in which the closure means (26) releases the opening (24) as a whole or in sections, at least in a direction transverse to the axis of rotation (12), into a closed position in which the closure means (26) completely closes the opening (24) at least in a direction transverse to the axis of rotation (12).

2. Machine tool (2) according to claim 1, **characterised in that** the planar partition wall (16) is spaced from the axis of rotation (12) without contact or in which the axis of rotation (12) runs within the partition wall (16) and/or in which the at least one workpiece holder (18) is spaced from the axis of rotation (12) without contact or that the axis of rotation (12) runs within at least one of the at least one workpiece holders (18).

3. Machine tool (2) according to claim 1 or 2, **characterised in that** the partition wall (16) comprises, in the area of the at least one opening (24), at least one guide, such as a groove or a projection, through which the closure means (26) can be guided from the release position to the closure position and back, and is secured against movement transverse to the direction of movement and/or that the closure means (26) is designed as a sliding door and comprises at least one planar, in particular plate-like, door element; or that the closure means (26) is designed as a roller shutter and comprises a plurality of lamellar closure elements.

4. Machine tool (2) according to one of the preceding claims, **characterised in that** the partition wall (16) comprises a plurality of openings (24) extending transversely to the axis of rotation (12), which are separated from one another by web sections of the partition wall (16), wherein each opening (24) is assigned its own closure means (26), or wherein at least two openings (24), in particular all openings (24) of the partition wall (16), are assigned a common closure means (26).

5. Machine tool (2) according to claim 4, **characterised in that** the partition wall (16) of the workpiece table (10) comprises at least one central web section (32) extending parallel to the axis of rotation (12), through which the axis of rotation (12) runs, and/or at least two edge web sections (34) extending parallel to the axis of rotation (12), which form an outer edge of the partition wall (16), in particular wherein in each case at least two, in particular at least four, openings (24) are arranged between the central web section (32) and the edge bar section (34), to each of which a separate or a common closure means (26) is assigned.

6. Machine tool (2) according to one of the above claims, **characterised in that** the partition wall (16) and the support structure (14) form a single, common component and/or that the central web section (32) and/or the at least two edge web sections (34) are designed to be load-bearing and supporting.

7. Machine tool (2) according to one of the above claims, **characterised in that** the axis of rotation (12) of the workpiece table (10) runs parallel to a horizontally extending X-axis or parallel to a vertically extending Y-axis and/or that the spindle axis (8) of the work spindle (6) runs parallel to a horizontally extending Z-axis, which runs transverse to the vertically extending Y-axis and transverse to the horizontally extending X-axis.

8. Machine tool (2) according to one of the above claims, **characterised in that** the workpiece table (10) comprises at least one first workpiece holder (28) and at least one second workpiece holder (30), which are arranged non-rotatably on the partition wall (16) and/or on the support structure (14) of the workpiece table (10) on opposite sides of the partition wall (16) with respect to the partition wall (16).

9. Machine tool (2) according to claim 8, **characterised in that** the first workpiece holder (28) and the second workpiece holder (30) are arranged and aligned symmetrically, in particular point symmetrically to one another with regard to the axis of rotation (12) and are attached non-rotatably on the partition wall (16) and/or the support structure (14) of the workpiece table (10).

10. Machine tool (2) according to claim 8 or 9, **characterised in that** the first workpiece holder (28) and the second workpiece holder (30) are arranged in a plane parallel to the separating surface of the partition wall (16), viewed in a direction transverse to the axis of rotation (12), offset from one another without overlapping.

11. Machine tool (2) according to one of the above claims, **characterised in that** the at least one workpiece table (10) is mounted to rotate or swivel directly on the machine frame (4) and the workpiece table (10) is transferred to the separating position in at least one main time-parallel loading and unloading mode of the machine tool (2), in which the first area (20) comprises a working area of the workpiece table (10) facing the work spindle (6), in which a workpiece holder (18) arranged therein faces the work spindle (6), and in which the second area (22) comprises a loading area of the workpiece table (10) facing away from the work spindle (6), in which a workpiece holder (18) arranged therein can be loaded and unloaded.

12. Machine tool (2) according to claim 11, **characterised in that** the at least one workpiece table (10) comprises at least two workpiece tables (10), which are parallel to one another with respect to their axes of rotation (12) and are spaced apart from one another without contact across the axis of rotation (12), and that the at least one work spindle (6) comprises at least two work spindles (6), each work spindle (6) being associated with a workpiece table (10).

13. Machine tool (2) according to one of the claims 1 to 10, **characterised in that** the at least one workpiece table (10) is mounted on a swivel support so as to rotate or swivel, wherein the swivel support is mounted on the machine frame (4) so as to rotate or swivel about a swivel axis and can be transferred from a first swivel position, in which a workpiece table (10) can be arranged in a working area facing the work spindle (6), into a second swivel position, in which the workpiece table (10) is arranged in a loading area, in which a workpiece holder (18) arranged therein can be loaded and unloaded.

14. Machine tool (2) according to claim 13, **characterised in that** the at least one workpiece table (10) comprises at least two workpiece tables (10), which are arranged on opposite sides of the swivel bracket, wherein a first workpiece table (10) is located in the working area when the swivel bracket is in its first swivel position, and a second workpiece table (10) is arranged in the loading area when the swivel bracket is in its first swivel position and wherein the first workpiece table (10) is arranged in the loading area when the swivel support is in its second swivel position, and the second workpiece table (10) is arranged in the working area when the swivel support is in its second swivel position.

## Revendications

1. Machine-outil (2) comprenant un bâti de machine (4) avec au moins une broche d'usinage (6) prémontée de manière à pouvoir tourner autour d'un axe de broche (8), avec au moins une table porte-pièce (10) associée à ladite au moins une broche d'usinage (6), qui est montée de manière à pouvoir tourner ou pivoter, directement ou indirectement, dans le bâti de machine (4) autour d'un axe de rotation (12), qui comporte une structure porteuse (14), une cloison fermée et plane (16) s'étendant sur toute la largeur de la table porte-pièce (10) parallèlement à l'axe de rotation (12) et sur toute la longueur de la table porte-pièce (10) parallèlement à l'axe de rotation (12), et qui comprend au moins un logement de pièce (18) fixé de manière solidaire en rotation à la cloison (16) et/ou à la structure porteuse (14), la table porte-pièce (10) pouvant être amenée, par rotation autour de l'axe de rotation (12), dans une position de séparation dans laquelle la cloison (16) est disposée de manière à ce que sa plus grande surface s'étende transversalement à l'axe de broche associé (8) et sépare physiquement une première zone (20) de la table porte-pièce (10), tournée vers la broche d'usinage (6) et dans laquelle un logement de pièce (18) qui y est disposé est tourné vers la broche d'usinage (6), d'une deuxième zone (22) de la table porte-pièce (10) opposée à la broche d'usinage (6), la deuxième zone (22) comprenant une zone de chargement de la table porte-pièce opposée à la broche d'usinage (6), la cloison (16) de la table porte-pièce (10) comportant au moins une ouverture continue (24) s'étendant transversalement à l'axe de rotation (12), à travers laquelle la cloison (16) peut être traversée par la broche d'usinage (6) et un logement de pièce (18) disposé dans une zone de chargement comprise dans la deuxième zone (22) est accessible à la broche d'usinage (6) qui la traverse, et la cloison (16) comprenant au moins un mécanisme de fermeture (26) de type plaque, qui est disposé dans ou sur ladite au moins une ouverture (24) et qui peut être amené, à partir d'une position de déverrouillage dans laquelle le mécanisme de fermeture (26) libère l'ouverture (24) au moins dans la direction transversale à l'axe de rotation (12), entièrement ou par sections, dans une position de fermeture dans laquelle le mécanisme de fermeture (26) ferme entièrement l'ouverture (24) au moins dans la direction transversale à l'axe de rotation (12).

2. Machine-outil (2) selon la revendication 1, **caractérisée en ce que** la cloison de type plaque (16) est espacée de l'axe de rotation (12) sans contact, ou **en ce que** l'axe de rotation (12) s'étend à l'intérieur de la cloison (16) et/ou **en ce que** le ou les logements de pièce (18) sont espacés de l'axe de rotation (12) sans contact ou **en ce que** l'axe de rotation (12) s'étend à l'intérieur d'au moins l'un des logements de pièce (18).

3. Machine-outil (2) selon la revendication 1 ou 2, **caractérisée en ce que** la cloison (16) comprend, dans la zone de ladite au moins une ouverture (24), au moins un guide, tel qu'une rainure ou une saillie, par lequel le mécanisme de fermeture (26) peut être guidé de la position de déverrouillage à la position de verrouillage et inversement, et est immobilisé contre tout déplacement transversal par rapport à la direction de guidage, et/ou **en ce que** le mécanisme de fermeture (26) est conçu à la manière d'une porte coulissante et comprend au moins un élément de type plaque, en particulier en forme de panneau, ou que le mécanisme de fermeture (26) est conçu à la manière d'un volet roulant et comprend une pluralité d'éléments de fermeture en forme de lamelles.

4. Machine-outil (2) selon l'une des revendications précédentes, **caractérisée en ce que** la cloison (16) comprend une pluralité d'ouvertures traversantes (24) s'étendant transversalement à l'axe de rotation (12), qui sont séparées les unes des autres par des parties de nervure de la cloison (16), chaque ouverture (24) étant associée à un mécanisme de fermeture (26) propre ou au moins deux ouvertures (24), en particulier à toutes les ouvertures (24) de la cloison (16), est associé un mécanisme de fermeture commun (26).

5. Machine-outil (2) selon la revendication 4, **caractérisée en ce que** la cloison (16) de la table porte-pièce (10) comprend au moins une partie de nervure centrale (32) s'étendant parallèlement à l'axe de rotation (12), à travers laquelle passe l'axe de rotation (12), et/ou au moins deux sections latérales de nervure (34) s'étendant parallèlement à l'axe de rotation (12), qui forment un bord extérieur de la cloison (16), en particulier au moins deux, notamment au moins quatre ouvertures (24) sont disposées entre chaque section centrale (32) et section latérale de nervure (34), auxquelles est associé respectivement un mécanisme de fermeture (26) propre ou commun.

6. Machine-outil (2) selon l'une des revendications précédentes, **caractérisée en ce que** la cloison (16) et la structure porteuse (14) forment un élément commun d'un seul tenant et/ou **en ce que** la section centrale de nervure (32) et/ou les au moins deux sections latérales de nervure (34) sont conçues pour supporter et répartir les charges.

7. Machine-outil (2) selon l'une des revendications précédentes, **caractérisée en ce que** l'axe de rotation (12) de la table porte-pièce (10) est parallèle à un axe X horizontal ou à un axe Y vertical et/ou **en ce que** l'axe de broche (8) de la broche d'usinage (6) est parallèle à un axe Z s'étendant horizontalement, qui est transversal à l'axe Y s'étendant verticalement et transversal à l'axe X s'étendant horizontalement.

8. Machine-outil (2) selon l'une des revendications précédentes, **caractérisée en ce que** la table porte-pièce (10) comprend au moins un premier logement de pièce (28) et au moins un deuxième logement de pièce (30), qui sont montés sur la cloison (16) de manière solidaire en rotation par rapport à la cloison (16) sur des côtés opposés de la cloison (16) et/ou à la structure porteuse (14) de la table porte-pièce (10).

9. Machine-outil (2) selon la revendication 8, **caractérisée en ce que** le premier logement de pièce (28) et le deuxième logement de pièce (30) sont disposés symétriquement, en particulier de manière ponctuellement symétrique, l'un par rapport à l'autre par rapport à l'axe de rotation (12) et sont fixés de manière solidaire en rotation sur la cloison (16) et/ou la structure porteuse (14) de la table porte-pièce (10)

10. Machine-outil (2) selon la revendication 8 ou 9, **caractérisée en ce que** le premier logement de pièce (28) et le deuxième logement de pièce (30) sont disposés dans un plan parallèle à la surface de séparation de la cloison (16), en étant décalés l'un par rapport à l'autre sans se chevaucher, dans une direction transversale à l'axe de rotation (12)

11. Machine-outil (2) selon l'une des revendications précédentes, **caractérisée en ce que** la ou les tables porte-pièces (10) sont montées de manière à pouvoir tourner ou pivoter directement sur le bâti de machine (4) et que la table porte-pièce (10) est amenée, au moins dans un mode de chargement et de déchargement de la machine-outil (2) parallèle au temps d'usinage principal, dans la position de séparation dans laquelle la première zone (20) forme une zone d'usinage de la table porte-pièce (10) tournée vers la broche d'usinage (6), dans laquelle un logement de pièce (18) disposé à l'intérieur est tourné vers la broche d'usinage (6), et dans laquelle la deuxième zone (22) comprend une zone de chargement de la table porte-pièce (10) opposée à la broche d'usinage (6), dans laquelle un logement de pièce (18) disposé à l'intérieur peut être chargé et déchargé.

12. Machine-outil (2) selon la revendication 11, **caractérisée en ce que** ladite au moins une table porte-pièce (10) comprend au moins deux tables porte-pièce (10) qui sont parallèles l'une à l'autre par rapport à leurs axes de rotation (12) et espacées l'une de l'autre sans contact parallèlement à l'axe de rotation (12), et **en ce que** ladite au moins une broche d'usinage (6) comprend au moins deux broches d'usinage (6), chaque broche d'usinage (6) étant associée à une table porte-pièce (10).

13. Machine-outil (2) selon l'une des revendications 1 à 10, **caractérisée en ce que** ladite au moins une table porte-pièce (10) est montée de manière à pouvoir tourner ou pivoter sur un support pivotant, le support pivotant étant monté de manière à pouvoir tourner ou pivoter sur le bâti de machine (4) autour d'un axe de pivotement et pouvant être déplacé d'une première position de pivotement, dans laquelle une table porte-pièce (10) peut être disposée dans une zone d'usinage tournée vers la broche d'usinage (6), vers une deuxième position de pivotement dans laquelle la table porte-pièce (10) est disposée dans une zone de chargement dans laquelle un logement de pièce (18) qui y est disposé peut être chargé et déchargé.

14. Machine-outil (2) selon la revendication 13, **caractérisée en ce que** ladite au moins une table porte-pièce (10) comprend au moins deux tables porte-pièce (10) disposées sur des côtés opposés du support pivotant, une première table porte-pièce (10) étant disposée dans la zone d'usinage lorsque le support pivotant se trouve dans la première position de pivotement, et une deuxième table porte-pièce (10) est disposée dans la zone de chargement lorsque le support pivotant est dans la première position de pivotement, et la première table porte-pièce (10) est disposée dans la zone de chargement lorsque le support pivotant est dans la deuxième position de pivotement, tandis que la deuxième table porte-pièce (10) est disposée dans la zone d'usinage lorsque le support pivotant est dans la deuxième position de pivotement.
